(19) **Europäisches Patentamt / European Patent Office / Office européen des brevets**

(11) **EP 2 959 523 B1**

(12) **EUROPEAN PATENT SPECIFICATION**

(45) Date of publication and mention
of the grant of the patent:
**17.01.2018 Bulletin 2018/03**

(21) Application number: **13707590.9**

(22) Date of filing: **22.02.2013**

(51) Int Cl.:
*H01M 2/16* (2006.01)          *C08L 1/00* (2006.01)
*D21H 11/00* (2006.01)          *D01F 2/00* (2006.01)
*H01M 10/24* (2006.01)          *D06M 11/38* (2006.01)
*D06M 101/06* (2006.01)          *D21H 13/08* (2006.01)

(86) International application number:
**PCT/EP2013/053580**

(87) International publication number:
**WO 2014/127828 (28.08.2014 Gazette 2014/35)**

(54) **BATTERY SEPARATOR**

**BATTERIESEPARATOR**

**SÉPARATEUR DE BATTERIE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015 Bulletin 2015/53**

(73) Proprietor: **Lenzing Aktiengesellschaft
4860 Lenzing (AT)**

(72) Inventors:
• **GALLO, Marco**
  **A-4840 Vöcklabruck (AT)**
• **SLATER, Peter Andrew**
  **Nuneaton**
  **Warwickshire CV10 9SG (GB)**
• **POTTER, Chris**
  **Little Eaton**
  **Derby DE21 5DL (GB)**

(74) Representative: **Nemec, Harald**
**Schwarz & Partner**
**Patentanwälte**
**Wipplingerstrasse 30**
**1010 Wien (AT)**

(56) References cited:
**WO-A1-2005/118950      US-A- 5 709 716
US-A1- 2006 014 080      US-A1- 2009 312 536**

• STANA-KLEINSCHEK ET AL.: "Correlation of regenerated cellulose fibres morphology and surface free energy components", LENZINGER BERICHTE, vol. 82, 2003, pages 83-95, XP002694805, cited in the application
• Cristina G Silva ET AL: "PEER-REVIEWED ARTICLE LYOCELL AND COTTON FIBERS AS REINFORCEMENTS FOR A THERMOSET POLYMER", , 1 January 2011 (2011-01-01), pages 78-98, XP055281414, Retrieved from the Internet: URL:https://www.ncsu.edu/bioresources/BioR es_07/BioRes_07_1_0078_Silva_Frollini_Lyoc ell_Fibers_Reinf_Thermoset_Polymer_1710.pd f [retrieved on 2016-06-17]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to the field of batteries, including alkaline (primary and secondary) and lithium batteries, which include separators comprising a porous layer including polymeric fibres.

Such separators serve to prevent an electrical connection between the anode and the cathode of the battery, or a short circuit.

Cellulosic fibres are widely employed in battery separators due to their ability to absorb and retain the electrolytes.

It is, for example, known to employ webs made from pulp or from rayon (viscose) fibres in battery separators.

The use of lyocell fibres in battery separators has been disclosed in EP 0 572 921 A1, US 2007/0014080 A1, US 2010/0310921 and US 2009/0017385 A1. WO 97/37392 discloses a battery separator made from a cellulose film formed from a solution of cellulose in an amine oxide. Further state of the art is provided by US 5,700,700, US 2006/014080, US 5,709,716, US 2009/312536 and DE 198 55 644.

European patent application 1 216 5714.2 (not pre-published) proposes the use of fibres of the lyocell genus with specific R10 and R18-values as well as a specific hemicellulose content in battery separators.

Mercerising cellulosic fibres is well-known in the textile industry for modifying yarns and fabric properties and achieve special performances. In short, mercerising means the treatment of the fibre, yarn or fabric with an alkaline solution, especially NaOH-solution. The effects of mercerisation on the fibre structure of lyocell, modal and viscose fibres have, inter alia, been discussed in Stana-Kleinschek et al., Correlation of regenerated cellulose fibres morphology and surface free energy components, Lenzinger Berichte 82 (2003), 83-95 and Colom, X., Carrillo, F., Crystallinity changes in lyocell and viscose-type fibres by caustic treatment, Europ. Polymer J. 38 (2002), 2225-2230. Mercerisation of fabrics containing lyocell fibre is disclosed in WO 95/024524 A1.

In the context of the invention also the article "Lyocell and cotton fibers as reinforcements for a thermoset polymer" (Silva et al. (2011), BioResources 7(1), 78-98) might be considered as prior art.

Especially in the case of alkaline batteries, the battery separator is required to have good chemical stability in the presence of strong electrolytes (such as 30-40% KOH). Further details about the requirements of battery separators in various types of batteries are disclosed in e.g. WO 2007/041312.

Furthermore, some of the cellulosic fibres proposed so far to be used in a battery separator (like rayon or mercerized pulp) have poor fibrillation ability and, therefore, do not allow obtaining battery separators with the desired properties in terms of density, porosity and dimensional stability.

It is, therefore, still desired to make battery separators with cellulosic fibres having an enhanced resistance towards alkali solutions.

Accordingly, in one aspect the present invention provides a battery separator, comprising fibres of the lyocell genus, wherein said lyocell fibres are mercerised.

Furthermore, the present invention provides the use of a mercerised lyocell fibre in a battery separator.

The present application also discloses a mercerised lyocell fibre, exhibiting a fibre length of 2-10 mm.

Finally, the present invention provides a battery, preferably an alkaline battery, comprising the battery separator according to the present invention.

Short description of the drawings

Figures 1 to 4 demonstrate the effect of the mercerisation of lyocell fibres on alkali resistance in terms of R10-value (Figures 1 and 3) and R18-value (Figures 2 and 4).

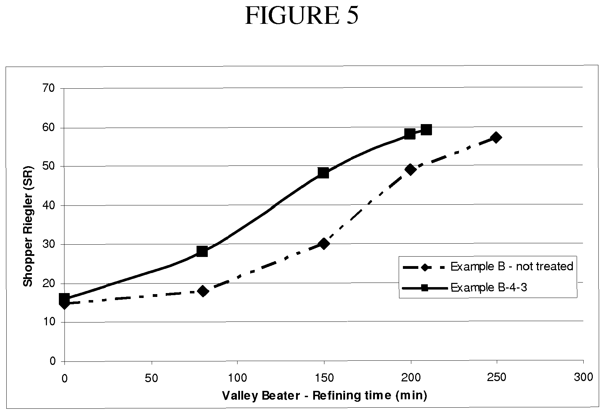

Figure 5 shows the results of a Schopper-Riegler test on non-mercerised and mercerised lyocell fibre.

Detailed description of the invention

It has surprisingly been found that mercerised lyocell fibres exhibit a much better resistance to electrolytes of especially alkaline batteries than standard cellulosic fibres hitherto proposed for battery separators.

It has been found that mercerised pulp (which is a cellulosic fibre, but not a man-made cellulosic fibre that has been spun from a cellulose-containing solution, like lyocell fibre) exhibits high alkali resistance when used in a battery separator, but exhibits a poor fibrillation ability (cf. US 7,781,104 B2). Apparently, the mercerisation treatment performed on the pulp negatively influences the fibrillation ability of the pulp.

In contrast therto, it has been found that mercerised lyocell fibres not only exhibit high alkali resistance when used in a battery separator, but also high fibrillation ability.

Cellulosic fibres of the lyocell genus are well known for their fibrillation ability and are employed in battery separators. Lyocell fibres are spun from a solution of cellulose in a tertiary amine-oxide.

Thanks to the fine and long fibrils, the separators made with such fibres have a suitable porosity, the ions mobility inside the battery is very good and the efficiency of the battery is high. The fibrils interlace very well during paper making and form a dense structure with low shrinkage and high dimensional stability. Moreover the average size of the pores is small, and this represents a barrier for dendrites.

The R10-value and the R18-value of the lyocell fibres employed according to the present invention is preferably as follows:

$$R10 > 87\%, \text{ preferably} > 93\%$$

$$R18 > 95\%, \text{ preferably} > 98\%.$$

As known to the skilled artisan, the R10-value of a cellulosic substrate is the amount of undissolved residue when exposing the substrate to 10% NaOH. R18 reflects the amount of undissolved residue when exposing the substrate to 18% NaOH. Both values can be measured according to DIN 54355.

All values given within this application for R10 and R18 are wt.%.

The R10 and R18-values given above are very high. Surprisingly, mercerised lyocell fibres having these properties still not only exhibit high alkali resistance when used in a battery separator, but also high fibrillation ability.

When producing battery separators comprising lyocell fibres meeting the above specifications, it was found that the Reduction by Weight of the separator in 40% KOH was significantly reduced.

Furthermore, separators containing the above-specified fibres have lower Reduction by Area in 40% KOH compared to separators containing other cellulosic fibres.

Lyocell fibres with the above-specified properties have also a high degree of fibrillation when they are refined with the conventional beating systems. For example, the Canadian Standard Freeness (CSF) of the refined fibres is below 700ml, or preferably below 500 ml.

The battery separator according to the present invention may comprise a mixture of mercerised lyocell fibres and, especially a mixture of mercerised lyocell fibres exhibiting the R10-values and R18-values as set out above.

The amount of the lyocell fibres fulfilling the above requirements in the separator may range from 1% to 100%, preferably 15% or more, 25% or more, 40% or more, or 50% or more.

The separator may comprise other constituents known to the skilled artisan, such as PVA fibres and PVA binders, pulp, non-mercerised viscose fibres or non-mercerised lyocell fibres.

The separator may be of any known design, such as a monolayer or multi-layer design. In multi-layer structures at least one layer should be a nonwoven layer. In such embodiments, there may be one or more additional layer(s) which can be selected from the group consisting of nonwovens or microporous layers (films), for example cellophane, PVA, polyamide, polyester or polyolefins.

In some embodiments the layers may be glued or thermally bonded together. Each layer may be coated with particles (like inorganic particles), may be grafted, treated with surfactants or corona treated. This kind of treatment may be symmetrical or asymmetrical, as described in US2012/028103A1.

Moreover the separator may include functional substances that have an "ions-trapping" function. They can selectively block molecules that reduce the battery performance (US2011/0117413A1).

It was found that battery separators comprising the lyocell fibres fulfilling the requirements according to the present inventions exhibit advantageous properties, such as

- A Reduction by Weight in KOH of < 3.5%, preferably 2.5% or less
- A Reduction by Area in KOH of < 3.0%, preferably 1.0% or less and/or
- A Frazier Air Permeability of < 50 $cm^3/cm^2/s$, preferably 20 $cm^3/cm^2/s$, most preferred from 3.5 $cm^3/cm^2/s$ to 15 $cm^3/cm^2/s$.

The lyocell fibres to be employed according to the present invention may exhibit a titre in the range of 0.2-10 dtex, preferably 0.2-2 dtex. The length of the fibres may be in the range of 1-20 mm, preferably 2-10 mm. The diameter of the fibrils after refining the fibres may be between 50 nm and 10.000 nm.

A mercerised lyocell fibre fulfilling the requirements exhibiting a length of from 2 to 10 mm has not been proposed before.

Preferably, the R10-value and the R18-value of the lyocell fibre according to the present invention is as follows:

$$R10 > 87\%, \text{ preferably } > 93\%$$

$$R18 > 95\%, \text{ preferably } > 98\%.$$

The mercerised lyocell fibres employed according to the present invention can be produced by mercerising lyocell fibres according to procedures known to the skilled artisan as such.

Typically, mercerisation is carried out with a NaOH-solution. The concentration of NaOH in the solution may preferably be from 5 wt.% to 20 wt.%. The duration of the treatment (residential time of the fibres in the treatment bath) may preferably be from 120 to 480 seconds.

Mercerisation may be carried out within the fibre production line just before the cutting step, where the fibres are still in the form of continuous filaments called "tow". Alternatively, mercerisation may be carried out in the fibre production line after cutting, when the fibres are already in the form of "staple" or "short cut" fibre. Of course, mercerisation can also be carried out off-line.

The mercerisation can be applied to any type of lyocell fibres, independently from the pulp types or other conditions used for the production of the fibres. If as the starting material for mercerisation fibres are used the R10 and R18-values of which are already high, notably R10 > 83%, preferably > 84% and R18 > 93%, preferably > 94%, excellent results can be obtained. The hemicellulose content of such fibres may preferably be <3%, as determined by two step sulphuric acid hydrolysis followed by quantification of the obtained monosaccharides by anion exchange chromatography.

Fibres with such high R10 and R18-values can be produced by using cellulosic starting materials, especially pulps or pulp mixtures, having corresponding properties in terms of R10-value, R18-value and hemicellulose content, respectively.

Especially, for making lyocell fibres with such high R10- and R18-values

-    All components of the cellulosic starting material should exhibit

$$R18 > 94\%,$$

$$R10 > 85\%$$

and

$$\text{Hemicellulose} < 3\%$$

-    At least 50% in weight of the cellulosic starting material should exhibit

$$R18 > 96\%,$$

$$R10 > 90\%$$

and

$$\text{Hemicellulose} < 3\%.$$

In order to produce lyocell fibres with a very high R10- and R18-value, at least 50% in weight of the cellulosic starting material should exhibit

$$R18 > 98\%,$$

$$R10 > 97\%$$

and

$$Hemicellulose < 1\%$$

Pulps fulfilling the above requirements are commercially available and/or can be produced by the skilled artisan according to the respective needs of the production, see for example US 2009/0312536 A1 or WO 2005/118950.

The cellulosic starting material may also include cotton linters.

Pulps fulfilling these requirements are commercially available and/or can be produced by the skilled artisan according to the respective needs of the production, see for example US 2009/0312536 A1 or WO 2005/118950.

Examples

Test Methods

Tests on Paper:

Basis Weight

Measured according to EDANA standard WSP130.1

Thickness

Measured according to ASTM D1777

Density Calculated: Density $(g/cm^3)$ = (Basis Weight $[g/m^2]$ / 10000) / (Thickness $[\mu m]$ / 10000)

Alkali Proof (Area shrinkage rate in KOH)

Procedure:

- cut a square sheet 120mm x 120 mm (A1). Cut carefully the specimen where the paper is uniform.
- immerse it in 40% KOH solution at 70°C.
- keep in the bath for 8 hours
- measure the area of the wet sample (A2)

$$Area\ shrinkage\ rate\ (\%) = (A1-A2)/A1\ x\ 100$$

Alkali Proof (Weight reduction rate in KOH)

Procedure:

- cut one or more pieces of separator with a weight of approximately 5g
- dry the sample at 80°C for 1 hour
- weigh the dried sample (W1)
- immerse it in 40% KOH solution at 70°C.
- keep in the bath for 8 hours
- wash the sample with water
- dry the sample at 80°C for 1 hour
- weigh the dried sample (W2)

$$Weight\ reduction\ rate\ (\%) = (W1-W2)/W1\ x\ 100$$

Frazier Air Permeability

Air permeability was measures according to JIS 1096-6,27.
The differential pressure of the air flow passing through the material was 0,5 inches of water.

Porosity

It was calculated dividing the paper basis weight (g/m$^2$) by the polymer density (g/cm$^3$) and by the paper thickness ($\mu$m), multiplying by 100 and finally subtracting the result by 100.

$$\text{Porosity (\%)} = 100 - (\text{basis weight} / [\text{density} \times \text{thickness}] \times 100)$$

Manufacture of lyocell fibres

Lyocell fibres were manufactured according to methods known as such to the skilled artisan from different pulps. The properties of the pulps employed, their respective amount in the fibre produced therefrom, and the properties of the resulting fibres are listed in the following table:

Table 1:

| Pulp type | | ref. | Fibre Examples (Percent of respective Pulp type in Fibre) | | | | | | | |
|---|---|---|---|---|---|---|---|---|---|---|
| | | | A | G | H | B | F | C | D | Q |
| Pulp type 1 | Xylan, % | 2.6 | 100 | | | | | | | |
| | Mannan, % | 0.7 | | | | | | | | |
| | Tot. Hemicellulose, % | 3.3 | | | | | | | | |
| | R10, % | 82.2 | | | | | | | | |
| | R18, % | 92.7 | | | | | | | | |
| Pulp type 2 | Xylan, % | 7.3 | | 100 | 50 | 20 | | | | |
| | Mannan, % | 5.3 | | | | | | | | |
| | Tot. Hemicellulose, % | 12.6 | | | | | | | | |
| | R10, % | 83.3 | | | | | | | | |
| | R18, % | 89.4 | | | | | | | | |
| Pulp type 3 | Xylan, % | 2.5 | | | 50 | 80 | 100 | 50 | | |
| | Mannan, % | 0.4 | | | | | | | | |
| | Tot. Hemicellulose, % | 2.9 | | | | | | | | |
| | R10, % | 85.9 | | | | | | | | |
| | R18, % | 94.9 | | | | | | | | |
| Pulp type 4 | Xylan, % | 2.4 | | | | | | 50 | 100 | |
| | Mannan, % | 0 | | | | | | | | |
| | Tot. Hemicellulose, % | 2.4 | | | | | | | | |
| | R10, % | 92.6 | | | | | | | | |
| | R18, % | 97.2 | | | | | | | | |

(continued)

| Pulp type | | ref. | A | G | H | B | F | C | D | Q |
|---|---|---|---|---|---|---|---|---|---|---|
| **Fibre Examples (Percent of respective Pulp type in Fibre)** | | | | | | | | | | |
| Pulp type 5 | Xylan, % | 1.6 | | | | | | | | |
| | Mannan, % | 0.2 | | | | | | | | |
| | Tot. Hemicellulose, % | 1.8 | | | | | | | | 50 |
| | R10, % | 93.6 | | | | | | | | |
| | R18, % | 97.4 | | | | | | | | |
| Pulp type 6 | Xylan, % | 0.5 | | | | | | | | |
| | Mannan, % | 0 | | | | | | | | |
| | Tot. Hemicellulose, % | 0.5 | | | | | | | | 50 |
| | R10, % | 98.6 | | | | | | | | |
| | R18, % | 99.5 | | | | | | | | |
| **Fibre properties:** | | | A | G | H | B | F | C | D | Q |
| dtex | | | 1.7 | 1.7 | 1.3 | 1.7 | 1.3 | 1.7 | 1.7 | 1.3 |
| length, mm | | | 4 | 5 | 5 | 4 | 5 | 4 | 5 | 5 |
| Xylan, % | | | 2 | 7.3 | 4.3 | 3 | 1.6 | 2.1 | 2.6 | 1.1 |
| Mannan, % | | | 0.2 | 4.9 | 2.3 | 1.6 | 0.2 | 0.2 | 0.1 | 0.1 |
| Tot. Hemicellulose, % | | | 2.2 | 12.2 | 6.6 | 4.6 | 1.8 | 2.3 | 2.7 | 1.2 |
| R10, % | | | 80.1 | 75.2 | 78 | 82.4 | 79.9 | 85.7 | 88.1 | 89.7 |
| R18, % | | | 93.3 | 83.4 | 88.8 | 92.3 | 93.8 | 95.2 | 96.4 | 97.5 |

Mercerisation of Fibres

Lyocell fibres produced from the same starting materials and spun under the same conditions as for examples B and C above were mercerised in aqueous NaOH-solutions in the tow form.

The fibres were then cut to a length of 3 mm. The mercerisation process employed the following parameters:

Concentration of NaOH (%):   5 - 10 - 15 - 20
Residential time (s):   120 - 240 - 480
Bath temperature (°C):   25

The alkali resistances of the mercerised fibres in terms of R10-value and R18-value were determined.

The respective test regimes and results in terms of R10-value and R18-value are summarized in the following table:

Table 2 - Test Regimes for mercerisation and results

| example | Starting fibers | Mercerisation conditions | | | Alkali Resistance | |
|---|---|---|---|---|---|---|
| | | NaOH concentration (%) | Residential time (s) | Bath Temperature, °C | R10% | R18% |
| C-1-0 | Example C | 0 | 0 | 25 | 85.7 | 95.2 |
| C-1-1 | Example C | 5 | 120 | 25 | 87.0 | 97.0 |
| C-1-2 | Example C | 10 | 120 | 25 | 91.3 | 98.4 |
| C-1-3 | Example C | 15 | 120 | 25 | 94.5 | 98.9 |
| C-1-4 | Example C | 20 | 120 | 25 | 94.5 | 98.7 |

(continued)

| example | Starting fibers | Mercerisation conditions | | | Alkali Resistance | |
|---|---|---|---|---|---|---|
| | | NaOH concentration (%) | Residential time (s) | Bath Temperature, °C | R10% | R18% |
| C-2-4 | Example C | 5 | 240 | 25 | 87.0 | 96.9 |
| C-3-1 | Example C | 10 | 240 | 25 | 93.5 | 98.6 |
| C-2-6 | Example C | 15 | 240 | 25 | 96.5 | 99.3 |
| C-3-2 | Example C | 20 | 240 | 25 | 96.8 | 98.5 |
| C-3-3 | Example C | 5 | 480 | 25 | 87.0 | 96.9 |
| C-3-4 | Example C | 10 | 480 | 25 | 95.3 | 98.6 |
| C-3-5 | Example C | 15 | 480 | 25 | 96.7 | 98.7 |
| C-3-6 | Example C | 20 | 480 | 25 | 96.9 | 98.6 |
| B-4-0 | Example B | 0 | 0 | 25 | 82.4 | 92.3 |
| B-4-1 | Example B | 5 | 240 | 25 | 83.3 | 95.0 |
| B-4-2 | Example B | 10 | 240 | 25 | 93.4 | 97.2 |
| B-4-3 | Example B | 15 | 240 | 25 | 95.4 | 97.7 |
| B-4-4 | Example B | 20 | 240 | 25 | 94.8 | 97.9 |

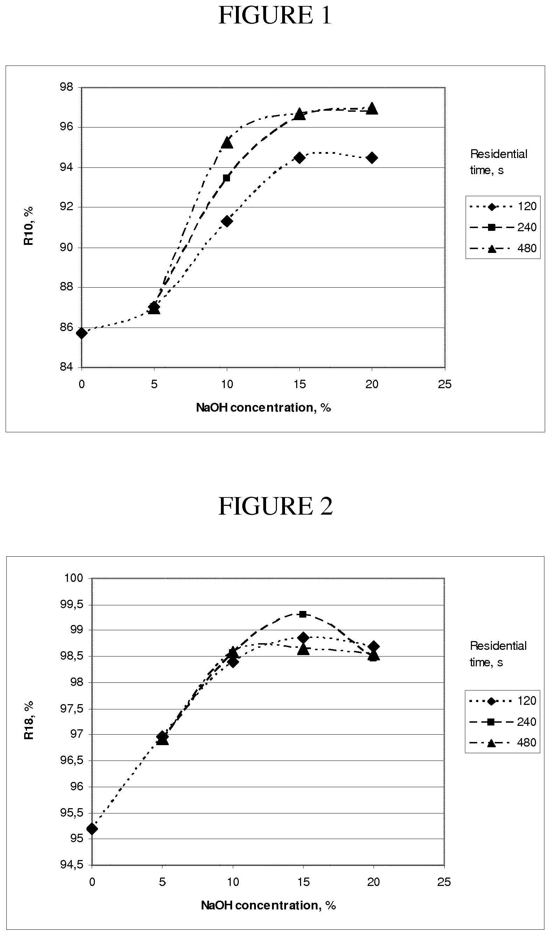

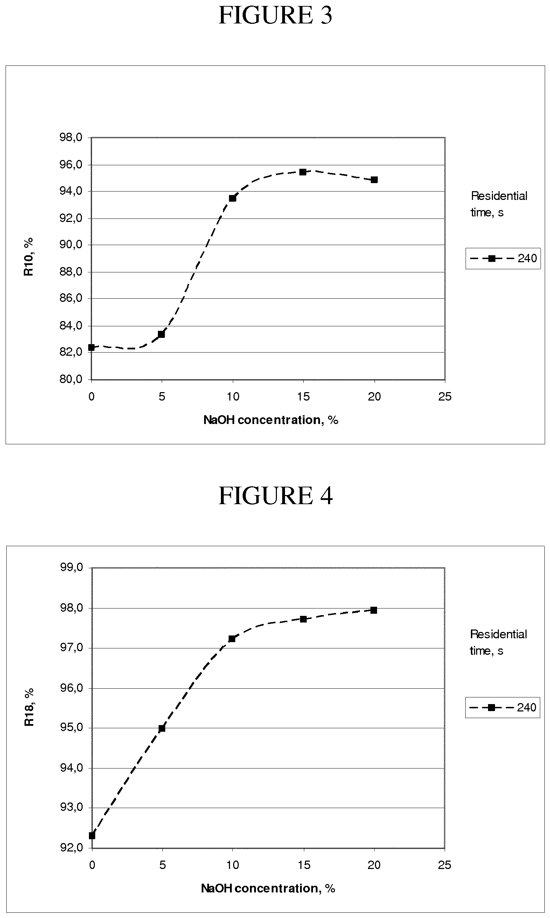

The results are shown graphically in Figure 1 (R10-value) and Figure 2 (R18-value) concerning the fibre of Example C, and Figure 3 (R10-value) and Figure 4 (R18-value concerning the fibre of Example B.

One can see that the R10-values and R18-values of lyocell fibres are significantly enhanced by a mercerisation treatment.

Refining

Lyocell fibres were refined with a Valley Beater according to ISO 5264-1.

Pulp fibres were refined with a PFI U3000 mill according to ISO 5264-2.

A Schopper-Riegler-test was performed on the unmercerised fibre of Example B and the mercerised fibre according to Example B-4-3 above in a Valley Beater.

The results of the tests are shown in Figure 3. One can clearly see that the mercerised fibre develops higher Schopper-Riegler-values within a shorter refining time This means that the mercerised lyocell fibre has a high degree of fibrillation.

Paper samples

Paper samples were prepared with a RAPID-KOTHEN sheet former, according to EN ISO 5269/2.

Various papers were manufactured from the fibres as summarized above, optionally in a mixture with other constituents.

Further tests were made with papers employing non-mercerised lyocell fibres, as well as with papers containing other constituents.

The composition of the paper samples as well as the properties determined therein are summarized in the following tables:

Table 3- Examples according to the invention

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|---|---|---|---|---|---|
| Paper Composition, % | PVA binder, 1.1 dtex, 3mm | | | | | | | | 15 | 15 | 15 | 15 | 15 | 15 | 15 |
| | PVA fibers, 1.1 dtex, 2mm | | | | | | | | 35 | 35 | 35 | 35 | 35 | 35 | 35 |
| | Eucalyptus pulp (CSF=460ml) | | | | | | | | | | | | | | |
| | Mercerized wood pulp (CSF>700ml) | | | | | | | | | | | | | | |
| | Cotton Linters pulp (CSF>700ml) | | | | | | | | | | | | | | |
| | Viscose fibers, 0.9 dtex, 3mm | | | | | | | | | | | | | | |
| | Lyocell example C-1-1, 150 ml CSF | 100 | | | | | | | 50 | | | | | | |
| | Lyocell example C-1-3, 150 ml CSF | | 100 | | | | | | | 50 | | | | | |
| | Lyocell example C-2-6, 150 ml CSF | | | 100 | | | | | | | 50 | | | | |
| | Lyocell example C-3-2, 150 ml CSF | | | | 100 | | | | | | | 50 | | | |
| | Lyocell example C-3-4, 150 ml CSF | | | | | 100 | | | | | | | 50 | | |
| | Lyocell example B-1-3, 150 ml CSF | | | | | | 100 | | | | | | | 50 | |
| | Lyocell example B-1-4, 150 ml CSF | | | | | | | 100 | | | | | | | 50 |
| Paper properties | Basis weight, g/m² | 45 | 44 | 46 | 45 | 45 | 43 | 43 | 44 | 45 | 44 | 44 | 42 | 43 | 44 |
| | Thickness, μm | 101 | 99 | 102 | 101 | 108 | 105 | 105 | 124 | 123 | 128 | 123 | 124 | 105 | 123 |
| | Density, g/cm³ | 0.45 | 0.44 | 0.45 | 0.45 | 0.42 | 0.42 | 0.41 | 0.35 | 0.37 | 0.34 | 0.36 | 0.34 | 0.41 | 0.36 |
| | Porosity, % | 67 | 67 | 67 | 67 | 69 | 70 | 70 | 74 | 73 | 75 | 74 | 75 | 70 | 74 |
| | Weight Reduction rate in KOH, % | 5.2 | 5.0 | 3.9 | 2.8 | 3.5 | 5.0 | 3.5 | 2.8 | 3.0 | 2.3 | 1.6 | 2.1 | 2.9 | 1.7 |
| | Area Shrinkage rate in KOH, % | 4 | 2 | 1.4 | 1.7 | 2.4 | 2.7 | 1.2 | 1.9 | 0.9 | 0.6 | 1.1 | 0.9 | 1 | 0.8 |
| | Frazier Air Permeability, cm³/cm²/sec | 2.2 | 1.8 | 3.9 | 1.9 | 4.2 | 3.2 | 1.6 | 5.6 | 6.1 | 9.2 | 12.3 | 14.3 | 25.2 | 13.6 |

EP 2 959 523 B1

Table 4 – Comparison Examples

| | | Ex. 15 | Ex. 16 | Ex. 17 | Ex. 18 | Ex. 19 |
|---|---|---|---|---|---|---|
| Paper Composition, % | PVA binder, 1.1 dtex, 3mm | 15 | 15 | 15 | 15 | 15 |
| | PVA fibers, 1.1 dtex, 2mm | 35 | 35 | 35 | 35 | 35 |
| | Eucalyptus pulp (CSF=460ml) | | | 25 | | |
| | Mercerized wood pulp (CSF>700ml) | | | | | 50 |
| | Cotton Linters pulp (CSF>700ml) | | | | 50 | |
| | Viscose fibers, 0.9 dtex, 3mm | | | 25 | | |
| | Lyocell Example B – Not Mercerised, 150 CSF | 50 | | | | |
| | Lyocell Example C – Not Mercerised, 150 CSF | | 50 | | | |
| Paper properties | Basis weight, g/m² | 46 | 45 | 45 | 46 | 47 |
| | Thickness, μm | 118 | 117 | 111 | 121 | 120 |
| | Density, g/cm³ | 0,38 | 0,4 | 0,41 | 0,38 | 0,39 |
| | Porosity, % | 70 | 72 | 70 | 72 | 71 |
| | Weight Reduction rate in KOH, % | 5.1 | 3.5 | 6.9 | 1.2 | 3.6 |
| | Area Shrinkage rate in KOH, % | 1.9 | 1.8 | 9 | 8.6 | 3.1 |
| | Frazier Air Permeability, cm³/cm²/sec | 7.2 | 8.7 | 28 | 60 | 71 |

Comparing Comparison Example 15 with Inventive Examples 13 and 14 and Comparison Example 16 with Inventive Examples 8 to 12, respectively, there is a remarkable reduction in the Weight Reduction rate in KOH obtained by employing mercerised lyocell fibre instead of non-mercerised lyocell fibre.

**Claims**

1.  A battery separator, comprising fibres of the lyocell genus, wherein said lyocell fibres are mercerised.

2.  Battery separator according to claim 1, **characterized in that** the R10-value and the R18-value of said lyocell fibres is as follows:

$$R10 > 87\%, \text{ preferably} > 93\%$$

$$R18 > 95\%, \text{ preferably} > 98\%.$$

3.  Battery separator according to any of the preceding claims, **characterized in that** the separator comprises a mixture of lyocell fibres exhibiting the properties as defined in claims 1 to 2.

4.  Battery separator according to any of the preceding claims, **characterized in that** the amount of said lyocell fibres in the separator is from 1% to 100%, preferably 15% or more, 25% or more, 40% or more, or 50% or more.

5.  Battery separator according to any of the preceding claims, **characterized in that** it exhibits a Reduction by Weight in KOH of < 3.5%, preferably 2.5% or less.

6. Battery separator according to any of the preceding claims, **characterized in that** it exhibits a Reduction by Area in KOH of < 3.0%, preferably 1.0% or less.

7. Battery separator according to any of the preceding claims, **characterized in that** it exhibits a Frazier Air Permeability of < 50 $cm^3/cm^2/s$, preferably 20 $cm^3/cm^2/s$, most preferred from 3.5 $cm^3/cm^2/s$ to 15 $cm^3/cm^2/s$.

8. The use of a mercerised lyocell fibre in a battery separator.

9. Use according to claim 8, **characterized in that** the R10-value and the R18-value of said lyocell fibre is as follows:

$$R10 > 87\%, \text{ preferably} > 93\%$$

$$R18 > 95\%, \text{ preferably} > 98\%$$

10. A battery, preferably an alkaline battery, comprising the battery separator according to any of claims 1 to 7.

**Patentansprüche**

1. Batterieseparator, der Fasern vom Lyocell-Genus umfasst, wobei die Lyocell-Fasern merzerisiert sind.

2. Batterieseparator gemäß Anspruch 1, **dadurch gekennzeichnet, dass** der R10-Wert und der R18-Wert der Lyocell-Fasern wie folgt sind:

$$R10 > 87\%, \text{ vorzugsweise} > 93\%$$

$$R18 > 95\%, \text{ vorzugsweise} > 98\%.$$

3. Batterieseparator gemäß einem der vorstehenden Ansprüche, **dadurch gekennzeichnet, dass** der Separator ein Gemisch aus Lyocell-Fasern umfasst, welche die Eigenschaften wie in den Ansprüchen 1 bis 2 definiert zeigen.

4. Batterieseparator gemäß einem der vorstehenden Ansprüche, **dadurch gekennzeichnet, dass** die Menge an Lyocell-Fasern im Separator 1% bis 100% beträgt, vorzugsweise 15% oder mehr, 25% oder mehr, 40% oder mehr oder 50% oder mehr.

5. Batterieseparator gemäß einem der vorstehenden Ansprüche, **dadurch gekennzeichnet, dass** er eine Reduktion an Gewicht in KOH von < 3,5%, vorzugsweise 2,5% oder weniger, zeigt.

6. Batterieseparator gemäß einem der vorstehenden Ansprüche, **dadurch gekennzeichnet, dass** er eine Reduktion an Fläche in KOH von < 3,0%, vorzugsweise 1,0% oder weniger, zeigt.

7. Batterieseparator gemäß einem der vorstehenden Ansprüche, **dadurch gekennzeichnet, dass** er eine Frazier Air Permeability von < 50 $cm^3/cm^2/s$, vorzugsweise 20 $cm^3/cm^2/s$, am meisten bevorzugt 3,5 $cm^3/cm^2/s$ bis 15 $cm^3/cm^2/s$, zeigt.

8. Verwendung einer merzerisierten Lyocell-Faser in einem Batterieseparator.

9. Verwendung gemäß Anspruch 8, **dadurch gekennzeichnet, dass** der R10-Wert und der R18-Wert der Lyocell-Faser wie folgt sind:

$$R10 > 87\%, \text{ vorzugsweise} > 93\%$$

$$R18 > 95\%,\ \text{vorzugsweise} > 98\%.$$

**10.** Batterie, vorzugsweise eine alkalische Batterie, die den Batterieseparator gemäß einem der Ansprüche 1 bis 7 umfasst.


**Revendications**

**1.** Séparateur d'accumulateur, comprenant des fibres du genre lyocell, dans lequel lesdites fibres de lyocell sont mercerisées.

**2.** Séparateur d'accumulateur selon la revendication 1, **caractérisé en ce que** la valeur R10 et la valeur R18 desdites fibres de lyocell sont les suivantes :

$$R10 > 87\ \%,\ \text{de préférence} > 93\ \%$$

$$R18 > 95\ \%,\ \text{de préférence} > 98\ \%.$$

**3.** Séparateur d'accumulateur selon l'une quelconque des revendications précédentes, **caractérisé en ce que** le séparateur comprend un mélange de fibres de lyocell affichant les propriétés telles que définies dans les revendications 1 et 2.

**4.** Séparateur d'accumulateur selon l'une quelconque des revendications précédentes, **caractérisé en ce que** la quantité desdites fibres de lyocell du séparateur s'inscrit dans une plage de 1 % à 100 %, et de préférence supérieure ou égale à 15 %, supérieure ou égale à 25 %, supérieure ou égale à 40 %, ou supérieure ou égale à 50 %.

**5.** Séparateur d'accumulateur selon l'une quelconque des revendications précédentes, **caractérisé en ce qu'**il affiche une réduction par poids du KOH < 3,5 %, de préférence inférieure ou égale à 2,5 %.

**6.** Séparateur d'accumulateur selon l'une quelconque des revendications précédentes, **caractérisé en ce qu'**il affiche une réduction par surface du KOH < 3,0 %, de préférence inférieure ou égale à 1,0 %.

**7.** Séparateur d'accumulateur selon l'une quelconque des revendications précédentes, **caractérisé en ce qu'**il affiche une perméabilité à l'air Frazier < 50 $cm^3/cm^2$/s, de préférence de 20 $cm^3/cm^2$/s, plus préférentiellement de 3,5 $cm^3/cm^2$/s à 15 $cm^3/cm^2$/s .

**8.** Utilisation d'une fibre de lyocell mercerisée dans un séparateur d'accumulateur.

**9.** Utilisation selon la revendication 8, **caractérisée en ce que** la valeur R10 et la valeur R18 desdites fibres de lyocell sont les suivantes :

$$R10 > 87\ \%,\ \text{de préférence} > 93\ \%$$

$$R18 > 95\ \%,\ \text{de préférence} > 98\ \%.$$

**10.** Accumulateur, de préférence accumulateur alcalin, comprenant le séparateur d'accumulateur selon l'une quelconque des revendications 1 à 7.

# FIGURE 1

# FIGURE 2

# FIGURE 3

# FIGURE 4

# FIGURE 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0572921 A1
- US 20070014080 A1
- US 20100310921 A
- US 20090017385 A1
- WO 9737392 A
- US 5700700 A
- US 2006014080 A
- US 5709716 A
- US 2009312536 A

- DE 19855644
- EP 12165714 A
- WO 95024524 A1
- WO 2007041312 A
- US 7781104 B2
- US 2012028103 A1
- US 20110117413 A1
- US 20090312536 A1
- WO 2005118950 A

**Non-patent literature cited in the description**

- **STANA-KLEINSCHEK et al.** Correlation of regenerated cellulose fibres morphology and surface free energy components. *Lenzinger Berichte,* 2003, vol. 82, 83-95

- **COLOM, X. ; CARRILLO, F.** Crystallinity changes in lyocell and viscose-type fibres by caustic treatment. *Europ. Polymer J.,* 2002, vol. 38, 2225-2230
- **SILVA et al.** Lyocell and cotton fibers as reinforcements for a thermoset polymer. *BioResources,* 2011, vol. 7 (1), 78-98